(19) Europäisches Patentamt
European Patent Office
Office européen des brevets

(11) **EP 2 078 477 B1**

(12) **EUROPEAN PATENT SPECIFICATION**

(45) Date of publication and mention
of the grant of the patent:
**27.07.2011 Bulletin 2011/30**

(21) Application number: **08100439.2**

(22) Date of filing: **14.01.2008**

(51) Int Cl.:
*A47C 27/00* <sup>(2006.01)</sup>   *C08G 18/48* <sup>(2006.01)</sup>

(54) **Body supporting structure**

Körperstützstruktur

Structure de support de corps

(84) Designated Contracting States:
**AT BE BG CH CY CZ DE DK EE ES FI FR GB GR HR HU IE IS IT LI LT LU LV MC MT NL NO PL PT RO SE SI SK TR**

(43) Date of publication of application:
**15.07.2009 Bulletin 2009/29**

(73) Proprietor: **Recticel**
**1140 Brussel (Evere) (BE)**

(72) Inventors:
• **Poppe, Karel**
**B-9240 Zele (BE)**

• **Mortelmans, Rudi**
**B-9140 Temse (BE)**

(74) Representative: **Van Reet, Joseph et al**
**Gevers**
**Intellectual Property House**
**Holidaystraat 5**
**1831 Diegem (BE)**

(56) References cited:
**EP-A- 0 897 940      WO-A-2007/111872**
**DE-A1- 19 961 753    GB-A- 2 346 553**
**US-B1- 6 271 277**

**Description**

The present invention relates to a body supporting structure, in particular a mattress, a pillow or a seat, for supporting a person, which supporting structure comprises a thermally insulating and moisture regulating comfort layer which is applied onto a support. The comfort layer is made of a polyurethane foam which has a density of between 25 and 70 kg/m$^3$, a water vapour resistance $R_{et}$, measured in accordance with DIN EN 31092:1993, of less than 60 m$^2$Pa/W and an ILD 40% value, measured in accordance with ISO2439 B, of less than 100 N.

The thermally insulating and moisture regulating comfort layer can be a part of a mattress cover. In this case it is usually combined with a top layer or ticking and a backing layer, which three layers are then quilted together to form a comfortable sleeping surface. Although less common, such a comfort layer can also be used in pillows and seats.

The comfort layer, in particular the comfort layer of a mattress, is of essential importance for the thermophysiological quality of the body supporting structure and in particular for the thermophysiological sleep comfort of a mattress. A first parameter of the comfort layer which is important is its thermal insulation or thermal resistance. The thermal insulation is a matter of personal preference: some persons like to have a mattress that feels warm whilst others prefer a mattress that feels cooler. For the sleep comfort it is of essential importance that the water vapour evaporating from the human body is absorbed and evacuated sufficiently quickly by the comfort layer so that the relative humidity of the air between the user and the comfort layer is kept sufficiently low. According to literature, this relative humidity may in particular not be higher than 65 % since otherwise it would have a negative effect on the sleep comfort. Also for seating applications, for example in automotive applications where higher temperatures are not unusual, it is advantageous that moisture from the person sitting on the seat is efficiently removed to increase the sitting comfort.

In practice, a comfort layer made of wool is considered to provide a good sleep comfort for mattresses whilst for example polyurethane foam is considered not to be that good as wool. Compared to polyurethane foam, wool has a relatively low thermal resistance so that the person sleeping thereon remains cooler than a person sleeping on a comfort layer made of a polyurethane foam layer. Moreover, wool is known for being able to absorb a lot of water vapour. Due to its hollow hair structure it can more particularly absorb water vapour up to 33% of its own weight. Wool also releases the absorbed moisture relatively slowly so that it does not become chilly as a result of the evaporation of this moisture. Another advantageous property of wool is its high breathability which is due to its low water vapour resistance. The absorbed moisture can thus easily be evacuated to the mattress core during the night. In contrast to wool, polyurethane foam has a higher thermal resistance so that it can provide a warmer sleeping climate but, notwithstanding its open-cell nature, its water vapour resistance is substantially higher. Hence, the evaporated body moisture is evacuated less efficiently which leads to a higher relative humidity. Since a too high temperature and a too high relative humidity have a negative effect on the sleep quality, a polyurethane foam comfort layer is considered to have worse thermophysiological properties than a wool layer.

An important advantage of a polyurethane foam layer is however that it has much better mechanical properties than a wool layer. A polyurethane foam layer assists more particularly in providing a better support or pressure distribution of the human body. Furthermore it contributes to a more durable puffiness of the quilted mattress cover. Wool on the other hand becomes further very quickly compacted so that it should be shaken up regularly. This is however not possible or practical for mattress or seat covers. Finally, some people prefer polyurethane foam due to its higher thermal insulation properties and thus due to its warmer feel.

An object of the present invention is now to provide a new polyurethane foam comfort layer which has an improved thermophysiological quality which may in particular even be better than the thermophysiological quality of the existing wool containing comfort layers.

To this end the polyurethane foam of the comfort layer comprises superabsorbent polymer particles dispersed therein in an amount of less than 5 wt. % based on the total foam weight so that the comfort layer has an increased short-time water vapour absorbency $F_i$.

It was found that, notwithstanding the fact that the polyurethane foam has a relatively high water vapour resistance, it is possible to achieve good thermophysiological properties by incorporating superabsorbent polymer particles in the polyurethane foam. It has more particularly been found that the short-time water vapour absorbency of the foam can be increased to a value which is several times higher than the short-time water vapour absorbency of wool. The polyurethane foam can thus absorb in a short time a larger amount of body moisture which enables to keep the relative humidity between the human body and the comfort layer relatively low to ensure a good sleep comfort. Although higher than the water vapour resistance of wool, the vapour resistance of polyurethane foam is still sufficiently low to enable the absorbed moisture to be evacuated sufficiently quickly out of the comfort layer.

The comfort layer of the present invention has a density of between 25 and 70 kglm$^3$, which is relatively high in order to improve the durability of the polyurethane foam. The durability of the foam is indeed negatively affected by the presence of the superabsorbent polymer particles in the foam. The required increase of the short-time water vapour absorbency could however already be achieved with an amount of superabsorbent polymer particles lower than 5 wt. % on the total foam weight so that the reduced durability of the foam could be compensated for by an increase of the foam density which is sufficiently small to keep the ILD 40% value (hardness) of the foam below 100 N.

In the prior art it is already known to add superabsorbent polymer particles (SAP) to hydrophilic polyurethane foam to increase the water absorption and retention capabilities thereof. These foams are however used for other applications. Reference can be made for example to US 6 271 277 wherein the hydrophilic polyurethane foam with superabsorbent polymer particles contained therein is described for vibration damping, diapers, sponges, wound dressings, tampons, cosmetic pads, drug release products plant growth media, absorbent in food trays and the like. In these applications the foam is not used as a comfort layer which is applied on a support to provide a body supporting structure such as a mattress, a pillow or a seat. The disclosed SAP containing hydrophilic polyurethane foams are moreover even not suited for such applications since they have for example a too high hardness which increases with the amount of SAP and with the density of the foam.

In a preferred embodiment of the invention, the short-time water vapour absorbency $F_i$ of the comfort layer is higher than 60 g/m$^2$, preferably higher than 65 g/m$^2$ and more preferably higher than 70 g/m$^2$.

Such high short-time water vapour absorbency values can already be achieved with relatively small amounts of superabsorbent polymer particles.

By superabsorbent polymer particles are in particular meant absorbent polymer particles which are able to absorb at least 30 times, preferably at least 50 times and more preferably at least 75 times their weight of water.

In a further preferred embodiment of the invention, the polyurethane foam is the reaction product of a polyol component, comprising a polyoxyalkylene polyol or a mixture of polyoxyalkylene polyols, and an isocyanate component, said polyoxyalkylene polyol or said mixture of polyoxyalkylene polyols comprises oxyethylene units forming at least 40%, preferably at least 45% and more preferably at least 50% of the total number of oxyalkylene units in said polyoxyalkylene polyols or in said mixture of polyoxyalkylene polyols.

An advantage of this embodiment is that due to the high content of oxyethylene units, the polyurethane foam becomes hydrophilic which contributes to even better water absorption properties. Another advantage is that the high content of oxyethylene units results in a softer foam so that even at the higher densities required to achieve a durable foam, the polyurethane foam can still have a quite low ILD 40% value (ILD 40% = Indentation Load Deflection at 40% indentation measured in accordance with ISO 2439 B, in particular an ILD 40% value lower than 80 N, more particularly lower than 60 N and preferably even lower than 50 N).

Other particularities and advantages of the invention will become apparent from the following description of some particular embodiments of the body supporting structure according to the present invention. The reference numerals used in this description relate to the annexed drawings wherein :

Figure 1 shows schematically a longitudinal sectional view through a mattress according to the invention;
Figure 2 shows, on a larger scale, a longitudinal sectional view through a portion of the quilt of the mattress illustrated in Figure 1; and
Figure 3 and Figure 4 are graphs representing the results of drying tests as explained hereinafter.

The invention relates to a structure for supporting a person which is lying or sitting on the structure. The body supporting structure is for example a mattress, a pillow or an upholstered seat and comprises a thermally insulating and moisture regulating comfort layer. This comfort layer may be applied onto a rigid support but is usually applied onto a resilient support, in particular onto a mattress core or onto a foam core of a seat, for example a sofa or a car seat. In case of a pillow the comfort layer may be part of a pillowcase whilst in case of a mattress it may be part of a mattress cover layer. Since the invention is primarily intended to be applied to a mattress, the further description will be given with reference to mattresses and more particularly to mattress cover layers.

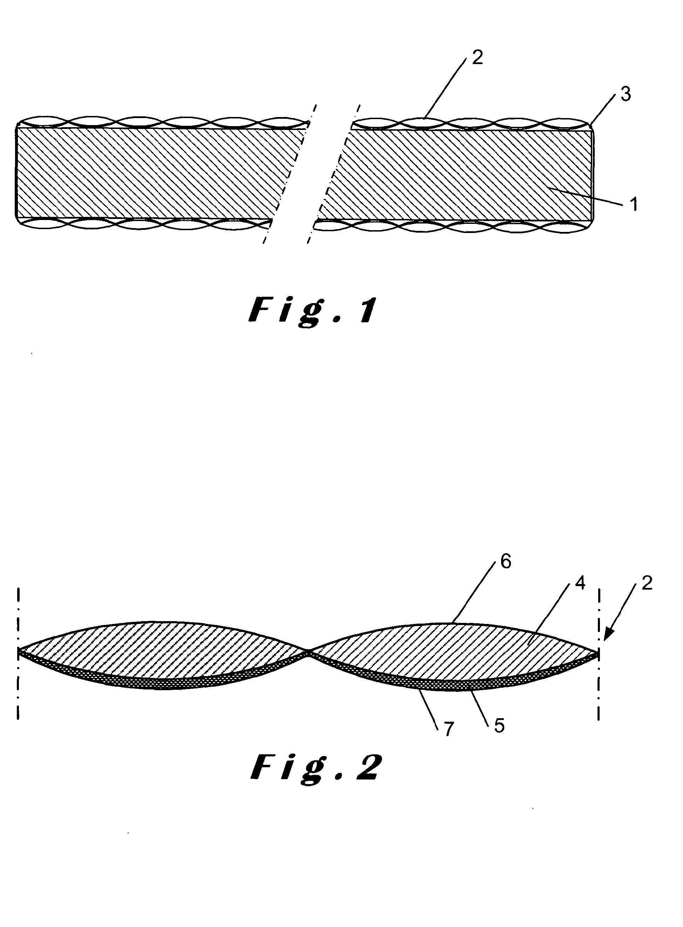

Figure 1 illustrates a longitudinal sectional view through a mattress according to the invention. This mattress comprises a conventional core 1 which may be a foam core, a spring core or a combination thereof. The mattress core 1 is enclosed in a mattress cover 2 formed of an upper portion which is removably fixed by means of a zipper 3 to a lower portion. As illustrated more into detail in Figure 2, the mattress cover 2 is made up of different layers including the thermally insulating and moisture regulating comfort layer 4. This comfort layer 4 consists of a polyurethane foam layer which is sandwiched, together with a harder stepping foam layer 5, between an outer textile layer or ticking 6, for example a woven polyester textile layer, and an inner backing layer 7, for example a non-woven polyester layer. The comfort layer 4 is quilted together with the other layers 5 to 7 so that a quilt is obtained. This quilt cannot only be used as mattress cover but also as pillow cover or seat cover.

The comfort layer 4 is intended to improve the sleep comfort of the person sleeping on the mattress (or in case of a seat the sitting comfort of the person sitting on the seat). The comfort layer 4 forms a thermal insulation so that it assists in controlling the temperature of the person sleeping on the mattress and also determines whether the mattress feels cooler or warmer. Moreover, and more importantly, the comfort layer 4 is also intended to regulate the relative humidity measured between the person sleeping on the mattress and the comfort layer. In order to enable a good sleeping comfort, this relative humidity should remain below 65 %. In the body supporting structure according to the invention, the comfort layer 4 is made of a polyurethane foam, more particularly of a relatively soft polyurethane foam which has an ILD 40% value, measured in accordance with ISO 2439 B of less than 100 N, preferably of less than 80 N, more preferably of less than 60 N and most preferably of less than 50 N. The ILD 40% value is preferably higher than 20 N and more preferably higher than 25 N.

Compared to polyurethane foams used as mattress core, the present polyurethane foam is relatively soft. Consequently, it is not intended to form a thick mattress but instead only a comfort layer which has an average thickness of between 5 and 50 mm, preferably of between 10 and 40 mm and more preferably of between 15 and 25 mm (average thickness is determined by dividing the volume of the foam by its surface area). As described hereabove, such a layer can be part of a mattress cover but alternatively or additionally it could also be used as a top layer of the mattress core itself (either on one side or on both sides of the mattress core).

An essential feature of the polyurethane foam of the comfort layer 4 is that it has a water vapour resistance $R_{et}$, measured in accordance with DIN EN 31092:1993, of less than 60 $m^2Pa/W$. The polyurethane foam is thus an open-celled foam and has an open-cell content which is preferably higher than 90%, more preferably higher than 95% and most preferably higher than 98%. Open-celled polyurethane foams can be produced by different ways, which are all known to the skilled man. First of all the polyurethane formulation can be tailored to obtain a high open-cell content in the obtained polyurethane foam. Alternatively or additionally, the polyurethane foam can be crushed or it can be reticulated to achieve the desired open-cell content. Reticulation relates to methods for removing or breaking the cell windows of polyurethane foams. Mechanical, chemical and thermal methods for reticulating foams are known. As one example, foam may be reticulated by destroying substantially all of the cell windows with a high temperature flame front or explosion, which still leaves the polyurethane strand network intact. Alternatively, the cell windows may be etched away using the hydrolysing action of water in the presence of an alkali metal hydroxide. Various reticulating methods of polyurethane foams are for example disclosed in US Patent Nos. 3 405 217, 3 423 338, 3 425 890 and 4 670 477.

A further essential feature of the polyurethane foam of the comfort layer 4 is that it comprises superabsorbent polymer particles dispersed therein in an amount of less than 5 wt. % based on the total foam weight so that the comfort layer has an increased short-time water vapour absorbency $F_i$ compared to the polyurethane foam which does not comprise superabsorbent polymer particles. This short-time water vapour absorbency can be determined as described hereinafter in the examples. The short-time water vapour absorbency $F_i$ of the comfort layer is preferably higher than 60 $g/m^2$, more preferably higher than 65 $g/m^2$ and most preferably higher than 70 $g/m^2$.

The polymers of the superabsorbent polymer particles are usually lightly crosslinked polymers containing a plurality of hydrophilic (polar) groups such as carboxyl, carboxamide, sulfonate salt or hydroxyl groups, along the polymer chains in sufficient proportion that the polymer would be water-soluble if it were not for the crosslinking thereof. Representative superabsorbent polymers include partially hydrolyzed polyacrylamide or a copolymer of acrylamide and acrylic acid crosslinked by the process of US 3 247 171. Various other polymers may be employed such as polyvinylpyrrolidone, and polymers and copolymers of acrylic acid, methacrylic acid, maleic anhydride, itaconic acid and the like, crosslinked to an extent corresponding to the amount of crosslinking introduced by copolymerizing a monoethylenically unsaturated monomer with from about 0.01 to about 1.5 mole percent of a divinyl compound such as methylene-bisacrylamide, ethylene glycol dimethacrylate, the divinyl ether of diethylene glycol or the like. In general any of the superabsorbent polymers disclosed in US 3 669 103 may be employed. Another group of superabsorbent polymers is prepared from water soluble polymers containing a plurality of carboxyl groups by reaction with difunctional crosslinking agents such as diglycidyl ether or other diepoxides or epichlorohydrin.

The term superabsorbent polymer particles is used in this specification to refer to moisture absorbing polymer particles which are able to absorb at least 30 times, preferably at least 50 times and more preferably at least 75 times their weight of water, at least if they are allowed to swell freely. In other words, the superabsorbent polymer particles have a fluid capacity after saturation of at least 30 g/g polymer particles, preferably of at least 50 g/g polymer particles and more preferably of at least 75 g/g polymer particles. The fluid capacity after saturation can be measured in a same way as described in EN13726-1. The particles may have the form of fibres but are preferably rather spherical (ratio of largest diameter to smallest diameter smaller than two). A very suitable product containing superabsorbent polymer particles is Luquasorb® of BASF, which is an example of a methacrylate salt, more particularly a sodium metacrylate salt that generates an osmotic pressure to suck surrounding water into the particle core. It is clear that also other salts can be used or another polymeric material such as an acrylate or a polymer comprising both acrylate and methacrylate units.

When taking up water, the superabsorbent polymer particles will swell but they do not dissolve in water. In their dry state the particles have preferably a size smaller than 200 $\mu$m, more preferably smaller than 120 $\mu$m and most preferably smaller than 80 $\mu$m. A size smaller than x mm means that more than 90 wt. % of the particles pass through a sieve of x mm.

The superabsorbent polymer particles are preferably incorporated in the polyurethane foam in an amount of more than 0.5 wt. %, more preferably in an amount of more than 1 wt. % and most preferably in an amount of more than 1.5 wt. % based on the total foam weight (i.e. the weight of the foam and of the superabsorbent polymer particles).

A drawback of incorporating the superabsorbent polymer particles in the polyurethane foam is that this has an adverse effect on the mechanical foam properties, in particular on the durability properties of the foam. It was found that the required durability properties can however be maintained by using a higher foam density, more particularly a foam density higher than 25 kg/m$^3$, preferably higher than 30 kg/m$^3$, and more preferably higher than 35 kg/m$^3$. In this way, the wet compression set of the polyurethane foam, measured in accordance with REN 1637 at a temperature of 50˚C, can be kept below 10%, and even below 5% and the dynamic fatigue hardness loss, measured in accordance with ISO 3385, can be kept below 40%, and even below 30%. It was also found that these durability properties can be achieved with a foam density of less than 70 kg/m$^3$ and since an increase of the foam density results, for a same foam formulation, in a higher ILD 40% value, the foam density is lower than 70 kg/m$^3$, preferably lower than 60 kg/m$^3$ and more preferably lower than 50 kg/m$^3$.

The ILD 40% value or hardness of the polyurethane foam can also be controlled by modifying the foam formulation. In general, the polyurethane foam is the reaction product of a polyol component and an isocyanate component. The polyol component preferably comprises a polyoxyalkylene polyol or a mixture of polyoxyalkylene polyols. The oxyalkylene units of these polyols are usually obtained starting from ethylene oxide and propylene oxide. Preferably, the polyoxyalkylene polyol or the mixture of polyoxyalkylene polyols comprises oxyethylene units which form at least 40%, preferably at least 45% and more preferably at least 50% of the total number of oxyalkylene units in the polyoxyalkylene polyol or in the mixture of polyoxyalkylene polyols.

The use of such high amounts of ethylene oxide in the polyol component has two main advantages. First of all, the produced polyurethane foam has a lower hardness (ILD 40% value) so that, even when having a higher density to achieve the desired durability properties, a sufficiently soft comfort layer can be achieved. Secondly, the produced polyurethane foam is more hydrophilic. The polyurethane foam itself can thus absorb more water. Moreover, water vapour is less hampered by the more hydrophilic polyurethane foam from reaching the superabsorbent polymer particles and from being absorbed thereby.

The polyurethane foam of the comfort layer of the present invention is preferably made by a one-shot process wherein a reactive mixture comprising a polyol component and an isocyanate component are allowed to react to produce the polyurethane foam. The superabsorbent polymer particles are added to this reactive mixture, in particular to the polyol component, so that these superabsorbent polymer particles are embedded in the produced polyurethane foam. Such a process is also already known from the prior art, more particularly from US 3 900 030, US 4 985 467 and EP 0 453 286. The content of these patent publications, in particular the description of the polyurethane foam production process and the description of the used superabsorbent polymer materials, is included herein by reference. Besides the superabsorbent polymer particles, other auxiliary materials or additives can be added to the polyurethane reactive mixture, such as anti-fungal, anti-bacterial agents, anti-mite agents, deodorizing agents, odorants, UV-absorbers, anti-oxidants.

## Examples

### Foam formulations

In Table 1 the formulation is presented of two foam samples according to the invention and a comparative example. All three samples were prepared by reacting a polyether polyol mixture, comprising polyol A (hydroxyl number IOH = 42, % ethylene oxide (EO) = 75 % , functionality n = 3) and polyol B (IOH=48, % EO = 10%, n=3) with TDI (toluenediisocyanate) in the presence of water as blowing agent, of a amine catalyst (TEDA L-33) and a surfactant. The three foam formulations are identical except for the amount of superabsorbent polymer (SAP) powder used therein.

**Table 1 :** formulation in weight parts of foam samples 1 and 2 and of comparative foam sample 3

|  | Sample 1 | Sample 2 | Compar. sample 3 |
|---|---|---|---|
| polyol A | 70 | 70 | 70 |
| polyol B | 30 | 30 | 30 |
| TDI | 30 | 30 | 30 |
| water | 2.2 | 2.2 | 2.2 |
| NCO index | 105 | 105 | 105 |
| TEDA-L33 | 0.5 | 0.5 | 0.5 |
| surfactant | 0.8 | 0.8 | 0.8 |

(continued)

|  | Sample 1 | Sample 2 | Compar. sample 3 |
|---|---|---|---|
| stannous octoate | 0.1 | 0.1 | 0.1 |
| SAP (grinded Luquasorb FP800) | 2.5 | 5 | 0 |
| % SAP on total foam weight | 1.9% | 3.8% | 0% |

## Mechanical foam properties

Table 2 shows the mechanical properties of foam samples made with the formulations indicated in Table 1 and of an additional comparative foam sample (compar. sample 4) which is based on a similar formulation containing however about twice the amount of water as blowing agent so that its density is about twice as low.

Table 2 : Mechanical foam properties

|  | Sample 1 | Sample 2 | Compar. sample 3 | Compar. sample 4 |
|---|---|---|---|---|
| density ($kg/m^3$) | 40 | 40 | 36 | 18 |
| ILD hardness at 40 % (N) [1] | 43 | 35 | 51 | 21 |
| wet compression set 50˚C (%) | 3.5 | 3.7 | 2.7 | 76.6 |
| dynamic fatigue hardness loss (%) (3) | 21.6 | 27 | 22.1 | 45.9 |
| (1) : measured in accordance with ISO2439 B (2) measured in accordance with REN 1637 (3) . measured in accordance with ISO 3385 | | | | |

## Mattress cover examples

Cover samples having a size of 34 X 34 cm were made with the composition of layers as indicated in Table 3. The top layer was each time a 100% polyester (PE) fabric (Margaux reference from Deslee). Table 3 also shows the thermophysiological properties as determined on these cover samples. In addition to the above described polyurethane foam comfort layers, a more closed-cell visco-elastic polyurethane foam layer (having a density of about 40 $kg/m^3$) and a wool layer (prior art) was used to compose the different covers. The stepping foam used therein was a polyether polyurethane foam with a density of 16 $kg/m^3$ whilst the thermobound layer used in combination with the wool layer was a polyester fibre.

Table 3 : Composition and thermophysiological properties of the covers

| | Cover 1 | Cover 2 | Compar. cover 3 | Compar. cover 4 | Compar. cover 5 | Compar. cover 6 |
|---|---|---|---|---|---|---|
| **Composition** | | | | | | |
| Top layer | PE textile | PE textile | PE textile | PE textile | PE textile | PE textile |
| Comfort layer | Sample 1 2 cm | Sample 2: 2 cm | Sample 3: 2 cm | Sample 4: 2 cm | Viscoelastic 2 cm | Wool 2 500 g/m$^2$ |
| Base layer | Stepping foam 1 cm | Stepping foam 1 cm | Stepping foam 1 cm | Stepping foam 1 cm | Stepping foam 1 cm | Thermobound 175 g/m$^2$ |
| Non woven backing layer | PE 40 g/m$^2$ | PE 40 g/m$^2$ | PE 40 g/m$^2$ | PE 40 g/m$^2$ | PE 40 g/m$^2$ | PE 40 g/m$^2$ |
| **Thermophysioloqical properties** | | | | | | |
| Thermal resistence $R_{ct}$ ($10^3$ m2K/W) | 646 | 614 | 654 | 628 | 691 | 536 |
| Water vapour absorbency $F_i$ | | | | | | |
| (g/m$^2$) | 68 | 83,5 | 60 | 53,3 | 57 | 21,5 |
| Class | 2 | 1 | 3 | 4 | 3 5 | |
| Water vapour resistance $R_{et}$ | | | | | | |
| (m$^2$Pa/W) | 56 | 56,7 | 57,1 | 54,9 | 61,7 | 45,4 |
| Class | 3 | 3 | 3 | 3 | 5 | 1 |
| Thermophysiological comfort vote | 2.66 | 2.32 | 3.00 | 3.34 | 4.32 | 2.36 |
| Water vapour permeability index $i_{mt}$ | 0.69 | 0.65 | 0.69 | 0.69 | 0.67 | 0.71 |

### Description of tests

### Measurements with the thermoregulatory model of human skin (Skin Model):

The thermoregulatory model of human skin - Skin Model for short - is a test device which simulates the dry as well as the sweating human skin. With the Skin Model the material specific thermophysiological quantities of padding materials for mattresses, i.e. mattress covers, relevant to sleep comfort, are determined.

### Stationary Skin Model measurements:

In these tests material specific data of the padding materials for mattresses are measured which determine their physiological properties under "stationary" of "normal" conditions. It is assumed that the person lying on the mattress is only sweating insensibly, and there exists a time-constant heat and moisture flux from the person's body to the ambience. The moisture flux from the skin appears as water vapour (insensible sweating).

The test apparatus as well as the test methods are described in DIN EN 31 092 (02/94) or ISO 11 092 (10/93).

### Thermal resistance (thermal insulation) $R_{ct}$(m$^2$K/W):

| | |
|---|---|
| Apparatus: | Hohenstein Skin Model |
| Test conditions: | according to DIN EN 31 092 (02/94) or to ISO 11 092 (10/93) |
| Test climate: | $T_a$ = 20˚C $\varphi_a$= 65% r.h. |

Mean value of 3 single measurements with 3 different specimen items of each sample.

### Water vapour resistance $R_{et}$ (m$^2$Pa/W):

| | |
|---|---|
| Apparatus: | Hohenstein Skin Model |
| Test conditions: | according to DIN EN 31 092 (02/94) or to ISO 11 092 T (10/93) |
| Test climate: | $T_a$ = 35˚C; $\varphi_a$ = 40% r.h. |

Mean value of 3 single measurements with 3 different specimen items of each sample.

### Water vapour permeability index $i_{mt}$:

The water vapour permeability index $i_{mt}$ is the ratio of thermal and water vapour resistances in accordance with the following equation:

$$i_{mt} = S.\frac{R_{ct}}{R_{et}}$$

where S equals 60 Pa/K.

$I_{mt}$ is dimensionless, and has values between 0 and 1. A value of 0 implies that the material is water vapour impermeable, that is, it has infinite water vapour resistance, and a material with a value of 1 has both the thermal resistance and water vapour resistance of an air layer of the same thickness.

### Short-time water vapour absorbency $F_i$ (g/m$^2$)

Short-time water vapour absorbency is determined together with the measurement of water vapour resistance on the "sweating" Skin Model. The samples are conditioned at 35˚C and 40% r.h. for 24 hours prior to the measurement, and their "dry weight" $W_d$ is determined. After a measuring time of 2 hours on the Skin Model, during which a time-constant water vapour flow passes through the samples, their "moist" weight $W_m$ is determined by weighing. Short-time water vapour absorbency $F_i$ in g/m$^2$, extrapolated from the 400 cm$^2$ area of the Skin Model's measuring unit to a padding area of 1 m$^2$, results as difference between "moist" weight $W_m$ and "dry" weight $W_d$.

| Apparatus: | Hohenstein Skin Model |
|---|---|
| Test conditions: | according to DIN EN 31 092 (02/94) or |
| | to ISO 11 092(10/93) |
| Test climate: | $T_a = 35°C$ $\varphi_a = 40\%$ r.h. |

Mean value of 3 single measurements with 3 different specimen items of each sample.

The test results are shown in Table 3.

**Discussion of test results:**

Generally, from a thermophysiological point of view, a mattress cover or a padding for mattresses has to be judged the better, the lower its water vapour resistance $R_{et}$ and the higher its water vapour absorbency $F_i$.

As it is to be seen in Table 3, in this test series for Compar. Cover 5 the highest thermal resistance or **thermal insulation** $R_{et}$ is found. It is about 29% higher than of Compar. Cover 6 which possesses the comparatively lowest thermal insulation.

Second with regard to thermal insulation ranks Cover 2, followed by Compar. Cover 4. For Compar. Cover 3 and Cover 1, within the precision of the test, the same thermal insulation is found which is somewhat higher than of Compar. Cover 4.

Table 3 shows also the values of the water vapour resistance $R_{et}$ or "**breathability**". For Compar. Cover 6 in this test series the lowest water vapour resistance, and thus the highest "breathability" is found. It is about 36% higher than of Compar. Cover 5, the mattress cover with the comparatively highest water vapour resistance.

Considering the precision of the test, the four mattress covers Covers 1 and 2 and Compar. Covers 3 and 4 have the same "breathability" which lies between Compar. Covers 5 and 6.

With covers for mattresses of about the same thickness, as it is the case in this test series, the sleep comfort is strongly influenced by the absolute value of the water vapour resistance. However, from a technical point of view, the ratio of water vapour resistance to thermal insulation is also of interest. It is expressed by the water vapour permeability index $i_{mt}$ and shows the padding's **relative moisture transport properties.** These have to be judged the better, the higher the $i_{mt}$-value.

According to Table 3 with regard to relative moisture transport properties, as with regard to absolute water vapour resistance, Compar. Cover 6 ranks best, followed by Compar. Covers 3 and 4 and Cover 1. However, considering the precision of the test, the relative moisture transport properties of these four cover materials is the same.

Next with regard to relative moisture transport properties ranks Compar. Cover 5, followed by Cover 2. For the latter in this test series the lowest $i_{mt}$-value is found.

However, with the comparatively highest $F_i$-value Cover 2 with regard to **water vapour absorbency** performs best, followed by Cover 1. Next with regard to water vapour absorbency rank Compar. Covers 3 and 5 with, within the precision of the test, the same $F_i$-value. It is only slightly higher than of Compar. Cover 4.

Compar. Cover 6 is conspicuous by the lowest water vapour absorbency in this test series. It is only about ¼ of the water vapour absorbency of Cover 2.

**Summary:**

The thermophysiological sleep comfort on a mattress is determined by both its water vapour resistance and water vapour absorbency. However, as a result of fundamental research, the water vapour resistance is of about double the influence of the water vapour absorbency. With this assumption a thermophysiological comfort vote has been calculated, ranking the physiological comfort of the mattress paddings tested.

To calculate this comfort vote a rank value $s_i$ is attributed for each of the two quantities, $R_{et}$ and $F_i$, to the different covers. This rank value may vary between 1 and 6, a rank value of 1 indicating the best properties whilst a rank value of 6 indicates the worst properties.

In the next step for all covers the comfort vote is calculated based on the following formula:

$$\text{Thermophysiological comfort vote} = 0.66 \cdot R_{et} + 0.34 \cdot F_i$$

A padding has to be judged the better, the lower its comfort vote. Based on the comfort votes, a ranking between the different covers is thus obtained.

According to this ranking, within this test series the mattress padding Cover 2 has to be judged physiologically best, followed by Compar. Cover 6. However, with nearly the same comfort vote there is no big difference in the physiological quality between these two paddings.

Cover 1 has a comfort vote which is only a little bit higher than that of Compar. Cover 6. These results indicate that it is possible to achieve a physiological comfort with polyurethane foam which is similar or even somewhat better than the physiolocal quality of wool, by incorporating a sufficient amount of superabsorbent polymer particles in the polyurethane foam.

**Drying tests**

The above tests have shown that the comfort layers according to the invention can absorb moisture very well. It is however of essential importance that the comfort layer also releases the absorbed water sufficiently quickly. Tests were therefore done with the mattress covers 1 to 7 to determine their drying capabilities. In a first series of tests, about 10 grams of water were sprayed on top of the different cover samples (corresponding to about 100 $g/m^2$ water) whilst in a second series of tests about 10 grams of water were applied with a pipette on one single location onto the different cover samples. After that, the covers were stored together in a chamber at room temperature.

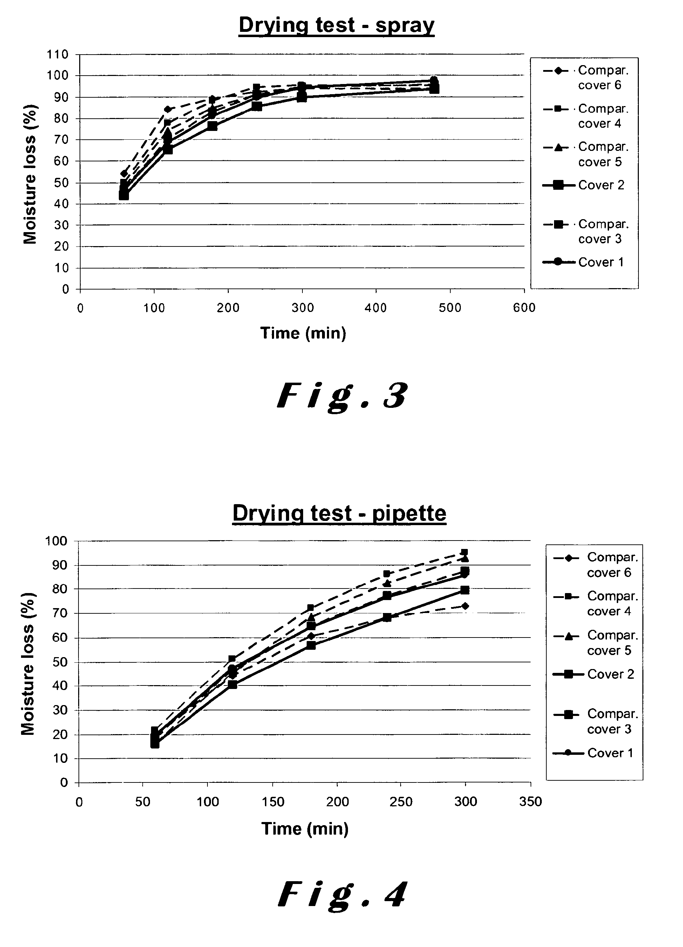

The results of the first series of tests are shown in Figure 3. It appears that cover 2, which comprises twice as much superabsorbent polymer particles as cover 1, dries somewhat more slowly than cover 1. Both cover layers according to the invention dry sufficiently quickly to enable a mattress cover to dry during day time. In the second series of tests, similar results can be observed, as is presented in Figure 4. It can be seen that all of the covers dry more slowly as a result of the deeper, local penetration of the water in the comfort layer. However, after 20 hours of drying (results not shown in the figures), both covers according to the invention (covers 1 and 2) had lost about 95% of the absorbed moisture in this second drying test. Cover 6 containing the wool, on the other hand, had lost only about 90% of water after 20 hours of drying under the same conditions. It appears thus that notwithstanding the presence of the superabsorbent polymer particles in the comfort layers according to the present invention and the resulting higher moisture absorption, the comfort layers according to the present invention dry sufficiently quickly.

**Claims**

1. A body supporting structure, in particular a mattress, a pillow or a seat, for supporting a person, which supporting structure comprises a thermally insulating and moisture regulating comfort layer which is applied onto a support and made of a polyurethane foam, which polyurethane foam has a density of between 25 and 70 $kg/m^3$, a water vapour resistance $R_{et}$, measured in accordance with DIN EN 31092:1993, of less than 60 $m^2Pa/W$ and an ILD 40% value, measured in accordance with ISO2439 B, of less than 100 N, **characterised in that** the polyurethane foam comprises superabsorbent polymer particles dispersed therein in an amount of less than 5 wt. % based on the total foam weight so that the comfort layer has an increased short-time water vapour absorbency $F_i$.

2. A body supporting structure according to claim 1, **characterised in that** the short-time water vapour absorbency $F_i$ of the comfort layer is higher than 60 $g/m^2$, preferably higher than 65 $g/m^2$ and more preferably higher than 70 $g/m^2$.

3. A body supporting structure according to claim 1 or 2, **characterised in that** said superabsorbent polymer particles are able to absorb at least 30 times, preferably at least 50 times and more preferably at least 75 times their weight of water.

4. A body supporting structure according to any one of the claims 1 to 3, **characterised in that** the polyurethane foam comprising said superabsorbent polymer particles in an amount of more than 0.5 wt. %, preferably more than 1 wt. % and more preferably more than 1.5 wt. % based on the total foam weight.

5. A body supporting structure according to any one of the claims 1 to 4, **characterised in that** the density of said polyurethane foam is higher than 30 $kg/m^3$, preferably higher than 35 $kg/m^3$, and preferably lower than 60 $kg/m^3$, more preferably lower than 50 $kg/m^3$.

**6.** A body supporting structure according to any one of the claims 1 to 5, **characterised in that** the polyurethane foam has a wet compression set, measured in accordance with REN 1637 at a temperature of 50°C, of less than 10%, preferably of less than 5% and the polyurethane foam has a dynamic fatigue hardness loss, measured in accordance with ISO 3385, of less than 40%, preferably of less than 30%.

**7.** A body supporting structure according to any one of the claims 1 to 6, **characterised in that** the ILD 40% value of said polyurethane foam is lower than 80 N, preferably lower than 60 N and more preferably lower than 50 N, and preferably higher than 20 N, more preferably higher than 25 N.

**8.** A body supporting structure according to any one of the claims 1 to 7, **characterised in that** the polyurethane foam is hydrophilic.

**9.** A body supporting structure according to any one of the claims 1 to 8, **characterised in that** the polyurethane foam is the reaction product of a polyol component, comprising a polyoxyalkylene polyol or a mixture of polyoxyalkylene polyols, and an isocyanate component, said polyoxyalkylene polyol or said mixture of polyoxyalkylene polyols comprising oxyethylene units forming at least 40%, preferably at least 45% and more preferably at least 50% of the total number of oxyalkylene units in said polyoxyalkylene polyol or in said mixture of polyoxyalkylene polyols.

**10.** A body supporting structure according to any one of the claims 1 to 9, **characterised in that** the polyurethane foam is made by a one-shot process wherein a reactive mixture comprising a polyol component and an isocyanate component are allowed to react to produce the polyurethane foam, said reactive mixture further comprising said superabsorbent polymer particles so that these superabsorbent polymer particles are embedded in the produced polyurethane foam.

**11.** A body supporting structure according to any one of the claims 1 to 10, **characterised in that** said superabsorbent polymer particles have, in their dry state, a size smaller than 200 $\mu$m, preferably smaller than 120 $\mu$m and more preferably smaller than 80 $\mu$m.

**12.** A body supporting structure according to any one of the claims 1 to 11, **characterised in that** said superabsorbent polymer particles comprise a polyacrylate, a polymethacrylate or a polyacrylate/methacrylate salt, in particular a sodium or an ammonium salt.

**13.** A body supporting structure according to any one of the claims 1 to 12, **characterised in that** the comfort layer has an average thickness of between 5 and 50 mm, preferably of between 10 and 40 mm and more preferably of between 15 and 25 mm.

**14.** A body supporting structure according to any one of the claims 1 to 13, **characterised in that** the support onto which the comfort layer is applied is a resilient support.

**15.** A body supporting structure according to claim 14, **characterised in that** said resilient support is a mattress core or a foam core of a seat.

**Patentansprüche**

**1.** Eine Körperstützstruktur, insbesondere eine Matratze, ein Kissen oder ein Sitz, zur Stützung einer Person, wobei die Stützstruktur eine thermisch isolierende und feuchtigkeitsregulierende Komfortschicht umfasst, die auf einen Träger aufgebracht ist und aus einem Polyurethanschaum besteht, wobei der Polyurethanschaum eine Dichte von zwischen 25 und 70 kg/m$^3$, eine Wasserdampfbeständigkeit R$_{et}$, gemessen nach DIN EN 31092:1993, von weniger als 60 m$^2$Pa/W und einen ILD 40 %-Wert, gemessen nach ISO2439 B, von weniger als 100 N hat, **dadurch gekennzeichnet, dass** der Polyurethanschaum darin verteilt superabsorbierende Polymerpartikel in einer Menge von weniger als 5 Gew.% auf Grundlage des Gesamtgewichts des Schaums umfasst, sodass die Komfortschicht eine erhöhte Kurzzeit- Wasserdampfaufnahmefähigkeit F$_i$ hat.

**2.** Eine Körperstützstruktur nach Anspruch 1, **dadurch gekennzeichnet, dass** die Kurzzeit- Wasserdampfaufnahmefähigkeit F$_i$ der Komfortschicht höher ist als 60 g/m$^2$, vorzugsweise höher als 65 g/m$^2$ und noch besser höher als 70 g/m$^2$.

3. Eine Körperstützstruktur nach Anspruch 1 oder 2, **dadurch gekennzeichnet, dass** die erwähnten superabsorbierenden Polymerpartikel in der Lage sind, mindestens 30 Mal, vorzugsweise mindestens 50 Mal und noch besser mindestens 75 Mal ihr Gewicht an Wasser zu absorbieren.

4. Eine Körperstützstruktur nach irgendeinem der Ansprüche 1 bis 3, **dadurch gekennzeichnet, dass** der Polyurethanschaum die erwähnten superabsorbierenden Polymerpartikel in einer Menge von mehr als 0,5 Gew.%, vorzugsweise mehr als 1 Gew.% und noch besser mehr als 1,5 Gew.%, auf Grundlage des Gesamtgewichts des Schaums, enthält.

5. Eine Körperstützstruktur nach irgendeinem der Ansprüche 1 bis 4, **dadurch gekennzeichnet, dass** die Dichte des erwähnten Polyurethanschaums höher ist als 30 kg/m$^3$, vorzugsweise höher als 35 kg/m$^3$, und vorzugsweise niedriger als 60 kg/m$^3$, noch besser niedriger als 50 kg/m$^3$.

6. Eine Körperstützstruktur nach irgendeinem der Ansprüche 1 bis 5, **dadurch gekennzeichnet, dass** der Polyurethanschaum eine geregelte Nasskompression, gemessen nach REN 1637 bei einer Temperatur von 50 ˚C, von weniger als 10 %, vorzugsweise weniger als 5 % hat und dass der Polyurethanschaum einen Härteverlust durch dynamische Ermüdung, gemessen nach ISO 3385, von weniger als 40 %, vorzugsweise weniger als 30 % hat.

7. Eine Körperstützstruktur nach irgendeinem der Ansprüche 1 bis 6, **dadurch gekennzeichnet, dass** der ILD 40 %-Wert des erwähnten Polyurethanschaums niedriger als 80 N, vorzugsweise niedriger als 60 N und noch besser niedriger als 50 N ist, und vorzugsweise höher als 20 N, noch besser höher als 25 N ist.

8. Eine Körperstützstruktur nach irgendeinem der Ansprüche 1 bis 7, **dadurch gekennzeichnet, dass** der Polyurethanschaum hydrophil ist.

9. Eine Körperstützstruktur nach irgendeinem der Ansprüche 1 bis 8, **dadurch gekennzeichnet, dass** der Polyurethanschaum das Reaktionsprodukt einer Polyolkomponente, welche ein Polyoxyalkylen-Polyol oder eine Mischung von Polyoxyalkylen-Polyolen ist, und einer Isocyanat-Komponente ist, wobei das Polyoxyalkylen-Polyol oder die erwähnte Mischung von Polyoxyalkylen-Polyolen Oxyethyleneinheiten umfasst, die mindestens 40 %, vorzugsweise mindestens 45 % und noch besser mindestens 50 % der gesamten Anzahl der Oxyalkyleneinheiten im erwähnten Polyoxyalkylen-Polyol oder in der erwähnten Mischung von Polyoxyalkylen-Polyolen bilden.

10. Eine Körperstützstruktur nach irgendeinem der Ansprüche 1 bis 9, **dadurch gekennzeichnet, dass** der Polyurethanschaum durch ein One-Shot-Verfahren hergestellt wird, wobei eine Reaktionsmischung, die eine Polyol-Komponente und eine Isocyanat-Komponente umfasst, miteinander reagieren können, um den Polyurethanschaum herzustellen, wobei die erwähnte Reaktionsmischung ferner die erwähnten superabsorbierenden Polymerpartikel umfasst, sodass diese superabsorbierenden Polymerpartikel in den hergestellten Polyurethanschaum eingebettet sind.

11. Eine Körperstützstruktur nach irgendeinem der Ansprüche 1 bis 10, **dadurch gekennzeichnet, dass** die erwähnten superabsorbierenden Polymerpartikel, in trockenem Zustand, eine Größe von weniger als 200 $\mu$m, vorzugsweise weniger als 120 $\mu$m und noch besser weniger als 80 $\mu$m haben.

12. Eine Körperstützstruktur nach irgendeinem der Ansprüche 1 bis 11, **dadurch gekennzeichnet, dass** die erwähnten superabsorbierenden Polymerpartikel ein Polyacrylat, ein Polymethacrylat oder ein Polyacrylat-/Methacrylatsalz umfassen, insbesondere ein Natrium- oder ein Ammoniumsalz.

13. Eine Körperstützstruktur nach irgendeinem der Ansprüche 1 bis 12, **dadurch gekennzeichnet, dass** die Komfortschicht eine durchschnittliche Dicke von zwischen 5 und 50 mm hat, vorzugsweise zwischen 10 und 40 mm und noch besser zwischen 15 und 25 mm.

14. Eine Körperstützstruktur nach irgendeinem der Ansprüche 1 bis 13, **dadurch gekennzeichnet, dass** der Träger, auf den die Komfortschicht aufgebracht ist, ein elastischer Träger ist.

15. Eine Körperstützstruktur nach Anspruch 14, **dadurch gekennzeichnet, dass** der erwähnte elastische Träger ein Matratzenkern oder ein Schaumkern eines Sitzes ist.

**Revendications**

1.  Structure de support de corps, en particulier un matelas, un oreiller ou un siège, destinée à supporter une personne, laquelle structure de support comprend une couche de confort thermiquement isolante et régulatrice d'humidité qui est appliquée sur un support et réalisée en mousse de polyuréthane, laquelle mousse de polyuréthane a une densité comprise entre 25 et 70 kg / m$^3$, une résistance à la vapeur d'eau R$_{et}$, mesurée conformément à DIN EN 31092 : 1993, de moins de 60 m$^2$Pa/W et une résistance à l'indentation (ILD) à 40 %, mesurée conformément à ISO2439 B, de moins de 100 N, **caractérisée en ce que** la mousse de polyuréthane comprend des particules de polymère super absorbantes dispersées dans celle-ci dans une quantité de moins de 5 % en poids basée sur le poids total de mousse de sorte que la couche de confort a une capacité d'absorption de vapeur d'eau de courte durée F$_1$ accrue.

2.  Structure de support de corps selon la revendication 1, **caractérisée en ce que** la capacité d'absorption de vapeur d'eau de courte durée F$_1$ de la couche de confort est supérieure à 60 g / m$^2$, de préférence supérieure à 65 g / m$^2$ et mieux encore supérieure à 70 g / m$^2$.

3.  Structure de support de corps selon la revendication 1 ou 2, **caractérisée en ce que** lesdites particules de polymère super absorbantes sont capables d'absorber au moins 30 fois, de préférence au moins 50 fois et mieux encore au moins 75 fois leur poids d'eau.

4.  Structure de support de corps selon l'une quelconque des revendications 1 à 3, **caractérisée en ce que** la mousse de polyuréthane comprend lesdites particules de polymère super absorbantes dans une quantité de plus de 0,5 % en poids, de préférence de plus de 1 % en poids et mieux encore de plus de 1,5 % en poids basée sur le poids total de mousse.

5.  Structure de support de corps selon l'une quelconque des revendications 1 à 4, **caractérisée en ce que** la masse volumique de ladite mousse de polyuréthane est supérieure à 30 kg / m$^3$, de préférence supérieure à 35 kg / m$^3$, et de préférence inférieure à 60 kg / m$^3$, mieux encore inférieure à 50 kg / m$^3$.

6.  Structure de support de corps selon l'une quelconque des revendications 1 à 5, **caractérisée en ce que** la mousse de polyuréthane a une déformation rémanente à la compression à l'état humide, mesurée conformément à REN 1637 à une température de 50˚C, de moins de 10 %, de préférence de moins de 5 % et la mousse de polyuréthane a une perte de dureté en fatigue dynamique, mesurée conformément à ISO 3385, de moins de 40 %, de préférence de moins de 30 %.

7.  Structure de support de corps selon l'une quelconque des revendications 1 à 6, **caractérisée en ce que** la résistance à l'indentation (ILD) à 40 % de ladite mousse de polyuréthane est inférieure à 80 N, de préférence inférieure à 60 N et mieux encore inférieure à 50 N, et de préférence supérieure à 20 N, mieux encore supérieure à 25 N.

8.  Structure de support de corps selon l'une quelconque des revendications 1 à 7, **caractérisée en ce que** la mousse de polyuréthane est hydrophile.

9.  Structure de support de corps selon l'une quelconque des revendications 1 à 8, **caractérisée en ce que** la mousse de polyuréthane est le produit de la réaction d'un composant polyol, comprenant un polyoxyalkylène polyol ou un mélange de polyoxyalkylène polyols, et d'un composant isocyanate, ledit polyoxyalkylène polyol ou ledit mélange de polyoxyalkylène polyols comprenant des unités oxyéthylène formant au moins 40 %, de préférence au moins 45 % et mieux encore au moins 50 % du nombre total d'unités oxyalkylène dans ledit polyoxyalkylène polyol ou ledit mélange de polyoxyalkylène polyols.

10. Structure de support de corps selon l'une quelconque des revendications 1 à 9, **caractérisée en ce que** la mousse de polyuréthane est réalisée par un processus en une fois dans lequel un mélange réactif comprenant un composant polyol et un composant isocyanate que l'on fait réagir pour produire la mousse de polyuréthane, ledit mélange réactif comprenant en outre lesdites particules de polymère super absorbantes de sorte que ces particules de polymère super absorbantes sont incorporées dans la mousse de polyuréthane produite.

11. Structure de support de corps selon l'une quelconque des revendications 1 à 10, **caractérisée en ce que** lesdites particules de polymère super absorbantes ont, dans leur état sec, une taille inférieure à 200 $\mu$m, de préférence inférieure à 120 $\mu$m et mieux encore inférieure à 80 $\mu$m.

**12.** Structure de support de corps selon l'une quelconque des revendications 1 à 11, **caractérisée en ce que** lesdites particules de polymère super absorbantes comprennent un polyacrylate, un polyméthacrylate ou un sel de polyacrylate / méthacrylate, en particulier un sel de sodium ou d'ammonium.

**13.** Structure de support de corps selon l'une quelconque des revendications 1 à 12, **caractérisée en ce que** la couche de confort a une épaisseur moyenne comprise entre 5 et 50 mm, de préférence comprise entre 10 et 40 mm et mieux encore comprise entre 15 et 25 mm.

**14.** Structure de support de corps selon l'une quelconque des revendications 1 à 13, **caractérisée en ce que** le support sur lequel la couche de confort est appliquée est un support élastique.

**15.** Structure de support de corps selon la revendication 14, **caractérisée en ce que** ledit support élastique est un noyau de matelas ou un noyau en mousse d'un siège.

**Fig. 1**

**Fig. 2**

## Drying test - spray

*Fig. 3*

## Drying test - pipette

*Fig. 4*

## REFERENCES CITED IN THE DESCRIPTION

**Patent documents cited in the description**

- US 6271277 B
- US 3405217 A
- US 3423338 A
- US 3425890 A
- US 4670477 A
- US 3247171 A
- US 3669103 A
- US 3900030 A
- US 4985467 A
- EP 0453286 A